(19) Europäisches Patentamt

European Patent Office

Office européen des brevets

(11) **EP 1 657 676 A2**

(12) **DEMANDE DE BREVET EUROPEEN**

(43) Date de publication:
**17.05.2006 Bulletin 2006/20**

(51) Int Cl.:
*G06T 5/00* (2006.01)   *G06T 5/40* (2006.01)
*B21D 28/26* (2006.01)   *B23K 26/00* (2006.01)
*G06F 9/44* (2006.01)   *B44C 1/24* (2006.01)
*G05B 19/42* (2006.01)

(21) Numéro de dépôt: 05300899.1

(22) Date de dépôt: **08.11.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **08.11.2004 FR 0412233**

(71) Demandeur: **Metal design concept**
**42350 La Talaudière (FR)**

(72) Inventeur: **Lhermite, Arnaud**
**71330, Le Planois (FR)**

(74) Mandataire: **Dupuis, François**
**Cabinet Laurent et Charras,**
**3 Place de l'Hôtel-de-Ville,**
**BP 203**
**42005 St. Etienne Cédex 1 (FR)**

(54) **Procédé et dispositif pour reproduire une image numérisée sur une plaque**

(57) Selon l'invention, on réalise sur une plaque (1) un décor reproduisant une image numérisée (20), en pilotant une machine de poinçonnage (17) pour réaliser dans la plaque (1) des perforations traversantes ayant des sections variables en fonction du niveau de gris du pixel considéré dans l'image de départ (20). On réalise ainsi un décor inaltérable et relativement bon marché.

FIG. 7

**Description**

La présente invention concerne les procédés et dispositifs pour reproduire un décor sur une plaque, le décor pouvant notamment être un marquage, une image, un dessin.

On a déjà imaginé de réaliser sur une plaque un décor par gravage, au moyen d'un outil tournant qui vient usiner la surface de la plaque selon des profondeurs variables reproduisant un décor.

La réalisation de tels décors est relativement onéreuse, et le contraste n'est pas toujours satisfaisant pour rendre la qualité de l'image. En outre, le décor est susceptible d'être dégradé dans le temps, par exemple par application de traces de peinture.

La présente invention vise à éviter les inconvénients des dispositifs et procédés connus, en permettant de réaliser des plaques décorées présentant une bonne définition de l'image reproduite, pouvant être produites à faible coût, et susceptibles de porter n'importe quel décor.

L'invention peut s'appliquer également au rendu d'un décor en négatif, permettant toutes les applications possibles.

L'invention vise simultanément à réaliser une telle plaque décorée présentant une résistance mécanique satisfaisante, tout en ayant un contraste suffisant pour un aspect satisfaisant de l'image reproduite.

Egalement, l'invention vise à concevoir un procédé et un dispositif qui soit d'utilisation simple, permettant la reproduction aisée de tous types de décor.

Pour atteindre ces buts ainsi que d'autres, l'invention propose un procédé pour reproduire un décor sur une plaque, dans lequel

a) on prépare une image numérisée formée d'une suite de pixels représentant chacun la luminosité d'une zone élémentaire de l'image,

b) on réalise, sur l'image numérisée, une opération de seuillage en remplaçant la valeur de chaque pixel par la valeur de seuil la plus proche dans une échelle prédéfinie de seuils de luminosité,

c) on réalise, dans la plaque, des perforations traversantes dont la position correspond à la position des pixels dans l'image, et dont la section correspond à la valeur de seuil affectée à chaque pixel de l'image.

De préférence, au cours de l'étape a) de préparation d'une image numérisée :

- si l'image est en noir et blanc, on retient dans la suite de pixels les niveaux de gris,

- si l'image est en couleurs, on la transforme en noir et blanc par combinaison, pour chaque pixel, des valeurs d'intensité pondérées du pixel dans trois couleurs primaires.

Lorsqu'une transformation noir et blanc est nécessaire, de bons résultats peuvent être obtenus en utilisant la formule :

$$G = CR \times R + CB \times B + CV \times V$$

Avec CR=46/151
CB = 25/151
CV = 80/151
R étant l'intensité en rouge
B étant l'intensité en bleu
V étant l'intensité en vert
G étant le niveau de gris

Selon un premier mode de réalisation, les perforations traversantes sont des perforations disjointes réalisées par poinçonnage.

Pour cela, on peut utiliser une machine de poinçonnage et une série d'outils de poinçonnage ayant chacun une section sensiblement proportionnelle à l'une des valeurs de seuil de l'échelle prédéfinie de seuils de luminosité.

De préférence, on effectue le poinçonnage de la plaque dans l'ordre croissant des sections d'outils de poinçonnage, en réalisant tout d'abord sur la plaque tous les poinçonnages de petite section de l'image, puis les poinçonnages de section immédiatement supérieure, pour finir par les poinçonnages de plus grande section.

De la sorte, le procédé est plus rapide, par le fait que l'on évite les temps de changement d'outil multiples. Mais surtout, on réduit les déformations de la plaque pendant le poinçonnage, de sorte que l'on obtient en fin de procédé une plaque généralement plane.

En alternative, pendant le procédé, on peut utiliser une machine de poinçonnage avec un outil de poinçonnage de section prédéfinie, et avec, entre les perforations adjacentes, un pas étant une fonction croissante de la valeur de niveau de gris de la zone considérée de l'image.

Selon un second mode de réalisation, les perforations traversantes sont des fentes généralement parallèles et continues à sections variables, réalisées par découpe au laser de la plaque, la section de chaque tronçon de fente étant une fonction croissante de la valeur de niveau de gris de la zone considérée de l'image.

Selon un autre aspect, l'invention propose un dispositif pour reproduire un décor sur une plaque par poinçonnage, comprenant :

- une machine de poinçonnage, avec un support de plaque pour supporter une plaque à poinçonner, un porte-outil adapté pour tenir un poinçon et ayant des moyens de frappe pour actionner axialement en impulsions le poinçon, des moyens de guidage et d'entraînement pour assurer un déplacement relatif du porte-outil et du support de plaque sur toute la surface à poinçonner de la plaque,

- des moyens électroniques de commande à processeur, pour piloter les moyens de frappe du porte-outil et les moyens d'entraînement en fonction d'instructions préalablement enregistrées dans une mémoire,

- des moyens d'acquisition d'image, pour enregistrer dans la mémoire l'image numérisée à reproduire,

- un programme enregistré dans la mémoire, adapté pour piloter le processeur et les moyens électroniques de commande selon les étapes du procédé de poinçonnage défini ci-dessus.

Dans le cas d'un procédé de découpe au laser, l'invention propose un dispositif pour reproduire un décor sur une plaque, comprenant :

- une machine de découpe par rayon laser, avec un support de plaque pour supporter la plaque à découper, une source de rayon laser pour diriger un rayon laser sur la plaque à découper, des moyens de guidage et d'entraînement pour assurer un déplacement relatif de la source de rayon laser et du support de plaque sur toute la surface à décorer de la plaque,

- des moyens électroniques de commande à processeur, pour piloter la source de rayon laser et les moyens d'entraînement en fonction d'instructions préalablement enregistrées dans une mémoire,

- des moyens d'acquisition d'image, pour enregistrer dans la mémoire l'image numérisée à reproduire,

- un programme enregistré dans la mémoire, adapté pour piloter le processeur et les moyens électroniques de commande selon les étapes du procédé de découpe au laser défini ci-dessus.

Les plaques décorées selon l'invention peuvent avoir diverses applications, et notamment elles peuvent constituer :

- un panneau de protection à marquage inaltérable,

- une grille de ventilation, le flux de gaz s'écoulant par les perforations traversantes ;

- un élément de mobilier urbain,

- une enseigne,

- un parement de bâtiment,

- une porte ou un portail décorés.

Dans toutes ces applications, la plaque peut être en un matériau inaltérable, les perforations traversantes constituent un décor lui-même inaltérable.

D'autres objets, caractéristiques et avantages de la présente invention ressortiront de la description suivante de modes de réalisation particuliers, faite en relation avec les figures jointes, parmi lesquelles :

- la figure 1 est une vue de face d'une plaque décorée selon un mode de réalisation de la présente invention ;

- la figure 2 est une vue à plus grande échelle montrant des perforations constituant un décor selon la présente invention ;

- la figure 3 est une vue de face d'une plaque décorée selon un second mode de réalisation de la présente invention ;

- la figure 4 est une courbe schématique illustrant une distribution de référence de niveaux de gris dans une image de bonne qualité ;

- la figure 5 illustre la correction que l'on peut apporter à une image ayant une distribution de niveaux de gris qui s'écarte de la distribution de référence de la figure 4 ;

- la figure 6 illustre le mode de balayage pour la réalisation de perforations selon l'invention ;

- la figure 7 est une vue schématique en perspective illustrant un dispositif selon un mode de réalisation de la présente invention ; et

- la figure 8 est une vue schématique d'un diagramme fonctionnel du logiciel permettant la mise en oeuvre du procédé pour la commande d'un dispositif de reproduction de décor sur une plaque selon un mode de réalisation de la présente invention.

La présente invention vise à réaliser un décor sur une plaque, dans des conditions qui rendent inaltérable le décor.

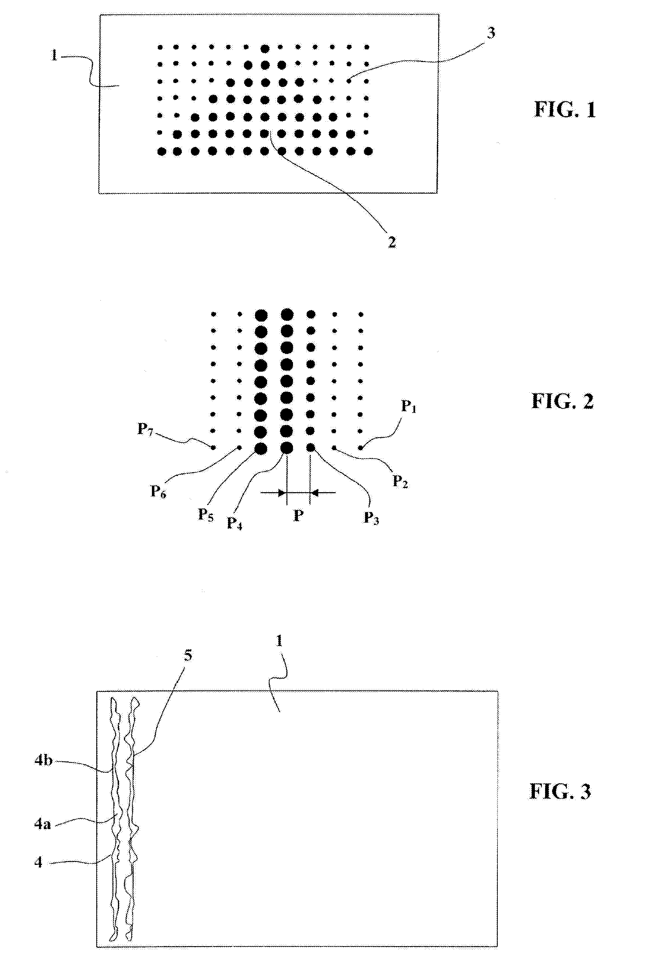

La figure 1 illustre un premier mode de réalisation d'un tel décor selon l'invention. On a représenté la réalisation, sur une plaque 1, par exemple une plaque en aluminium ou en acier inoxydable, d'un décor sous forme d'un triangle relativement sombre 2 inscrit dans un rectangle plus clair 3.

Le triangle relativement sombre 2 est constitué de trous traversants ayant un diamètre relativement grand, tandis que le rectangle 3 est constitué de trous traversants ayant un plus petit diamètre.

Par le fait que les trous sont traversants, ils prennent la couleur de l'arrière-plan. Avec un arrière-plan noir, il est ainsi possible de faire un triangle 2 relativement sombre et un rectangle 3 relativement clair.

Par contre, avec un arrière-plan lumineux, le triangle 2 sera plus clair que le rectangle 3.

Les trous constituant le décor sont relativement proches les uns des autres, par exemple distants les uns des autres selon un pas P constant comme illustré sur la figure 2.

Sur cette figure, on a illustré une série de trous à pas P constant, selon 10 une matrice rectangulaire.

Selon l'invention, chaque trou est la représentation d'un pixel d'une image numérisée. On distingue ainsi les pixels P1 à P7, parmi lesquels les pixels P1, P2, P6 et P7 sont représentés par des trous de petit diamètre, tandis que les pixels P4 et P5 sont représentés par des trous de gros diamètre, le pixel P3 étant représenté par un trou de diamètre moyen.

Les trous étant relativement proches les uns des autres, on comprend qu'il est possible de reproduire ainsi une image par points qui présente une continuité suffisante lorsqu'on la regarde depuis une certaine distance.

Dans ce cas, la position et le diamètre des trous correspond à la luminosité du pixel considéré dans l'image à reproduire.

Dans la réalisation illustrée sur les figures 1 et 2, le pas P est constant, et seul le diamètre des trous est variable en fonction des zones considérées de l'image.

Ainsi, les perforations traversantes sont des perforations disjointes réalisées par exemple par poinçonnage.

La figure 3 illustre un second mode de réalisation d'un décor sur une plaque selon l'invention.

Dans ce second mode de réalisation, on réalise, dans la plaque 1, des perforations traversantes en forme de fentes 4 et 5 généralement parallèles et continues mais à sections variables, réalisées par découpe au laser.

Dans ce cas, les tronçons successifs des fentes 4 et 5 ont une position et une largeur qui correspond à la luminosité du pixel dans la zone correspondante de l'image à reproduire.

On distingue ainsi, dans la fente 4, une zone 4a de grande largeur qui correspond à un pixel ou un ensemble de pixels à grande luminosité, et on distingue une zone 4b étroite qui correspond à un pixel ou à une pluralité de pixels qui ont une faible luminosité.

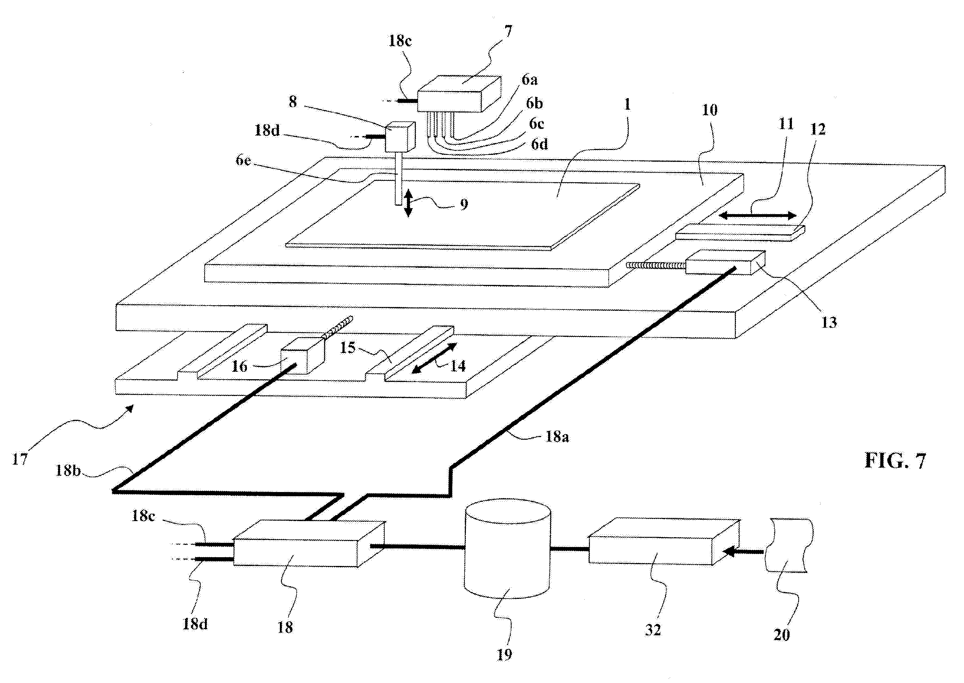

Pour réaliser un décor selon les figures 1 et 2, on utilise une machine de poinçonnage telle qu'illustrée par exemple sur la figure 7. On prévoit pour cela une série d'outils de poinçonnage 6a, 6b, 6c, 6d, 6e ayant chacun une section sensiblement proportionnelle à l'une des luminosités à réaliser pour reproduire correctement l'image. En pratique, les diamètres des outils de poinçonnage 6a-6e s'étagent régulièrement dans un domaine de largeurs de poinçon, et sont entreposés dans un changeur d'outils ou réservoir d'outils 7. L'un des outils 6e est engagé dans un porte-outil 8 ayant des moyens de frappe pour déplacer axialement en impulsions l'outil 6e, comme illustré par la double flèche 9, vers et à l'écart d'une plaque 1 portée par un support de plaque 10.

Le mouvement imprimé à l'outil 6e par les moyens de frappe du porte-outil 8 est un mouvement de percussion, par lequel l'outil 6e vient percer la plaque 1 de part en part, réalisant ainsi l'une des perforations qui reproduit le décor.

Le support de plaque 10 est déplaçable dans son plan en deux 15 directions perpendiculaires : le support de plaque 10 est déplaçable dans une première direction 11 selon laquelle il est guidé par une glissière 12 et entraîné par un premier moyen d'entraînement 13 tel qu'un vérin, et est déplaçable dans une seconde direction perpendiculaire 14 selon laquelle il est guidé par des glissières 15 et entraîné en translation par un second moyen d'entraînement 16 tel qu'un vérin.

Dans la réalisation illustrée, le support de plaque 10 se déplace face à un porte-outil 8 qui reste fixe.

On peut naturellement concevoir une solution alternative, dans laquelle le support de plaque 10 est fixe, et le porte-outil 8 se déplace dans le plan.

L'ensemble constitue une machine à poinçonner 17.

On prévoit des moyens électroniques de commande 18 à processeur, pour piloter les moyens de frappe du porte-outil 8 et les moyens d'entraînement 13 et 16 en fonction d'instructions préalablement enregistrées dans une mémoire 19.

Les signaux de pilotage sont transmis, depuis les moyens électroniques de commande 18, par une première ligne de commande 18a jusqu'au premier moyen d'entraînement 13, par une seconde ligne de commande 18b jusqu'au second moyen d'entraînement 16, par une troisième ligne de commande 18c jusqu'au réservoir d'outils 7, et par une quatrième ligne de commande 18d jusqu'au porte-outil 8.

Un programme, enregistré dans la mémoire 19, est adapté pour piloter le processeur et les moyens électroniques de commande 18 selon les étapes du procédé de reproduction d'un décor sur la plaque 1.

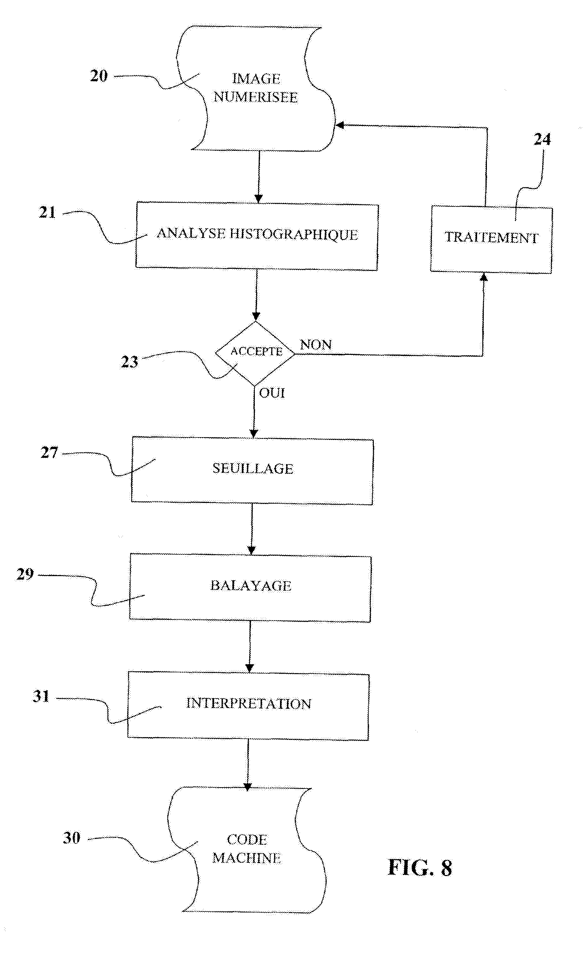

On décrira maintenant les étapes de ce procédé, selon un mode de réalisation de l'invention, en relation avec la figure 8.

On prépare tout d'abord une image numérisée 20, formée d'une suite de pixels représentant chacun la luminosité d'un point ou zone élémentaire de l'image de départ.

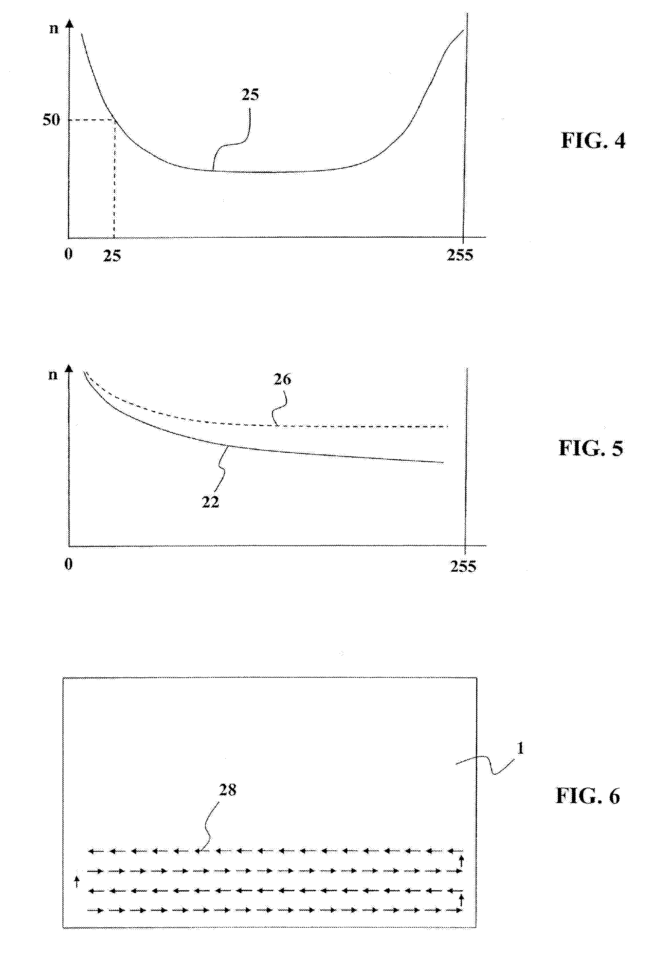

Si nécessaire, on réalise ensuite une étape d'analyse histographique 21 de l'image, en considérant le nombre de pixels de l'image pour chaque niveau de gris. Par exemple, sur la figure 5, si l'on considère 256 niveaux de gris, on compte, dans l'image numérisée 20 le nombre de pixels correspondant à chacun des 256 niveaux de gris. L'analyse histographique de l'image est ainsi constituée par la courbe 22.

On recherche ensuite, au cours de cette analyse histographique, si l'image est de qualité satisfaisante au point de vue du contraste et du niveau général de gris, pour une reproduction satisfaisante par poinçonnage ou découpe au laser sur une plaque comme le prévoit l'invention. Ainsi, au cours d'une étape de comparaison 23, on détermine si l'image est satisfaisante ou non.

Si l'image n'est pas satisfaisante, on effectue une étape 24 de traitement d'image, étape au cours de laquelle on cherche à modifier la courbe d'analyse histographique 22 de l'image en corrigeant les valeurs de niveau de gris des pixels pour se rapprocher d'une distribution de référence 25 telle qu'illustrée sur la figure 4 et dans laquelle.1a courbe des niveaux de gris présente un minimum dans la zone des niveaux de gris moyens et se relève progressivement dans les deux zones extrêmes de niveaux de gris forts et de niveaux de gris faibles. Le traitement de l'image, pour une image donnant une courbe d'analyse histographique 22 de la figure 5, se fait en corrigeant les pixels ayant un niveau de gris élevé pour augmenter leur nombre dans la zone de niveaux de gris à forte valeur, obtenant ainsi une courbe 26 illustrée en pointillés.

Ensuite l'image est à nouveau analysée par une étape d'analyse 21 et comparée par une étape de comparaison 23. Lorsqu'on décide que l'image est satisfaisante, on effectue une étape de seuillage 27, consistant à remplacer la valeur de chaque pixel par la valeur de seuil la plus proche dans une échelle prédéfinie de seuils de luminosité.

En pratique, on choisira une échelle de seuils de luminosité ayant le même nombre d'échelons que le nombre d'outils disponibles ayant une section différente.

Ensuite, on réalise, dans la plaque 1, des perforations traversantes dont la position correspond à la position des pixels dans l'image numérisée et dont la section correspond à la valeur de seuil affectée à chaque pixel de l'image.

Au cours de la première étape de préparation de l'image numérisée 20, il y a intérêt à disposer d'une image numérisée en noir et blanc.

Ainsi, si l'image de départ est en noir et blanc, on retient, dans la suite des pixels, les niveaux de gris de l'image de départ.

Si par contre l'image de départ est en couleur, c'est-à-dire constituée de trois tableaux de pixels relatifs chacun à l'une des trois couleurs primaires, par exemple le rouge, le bleu et le vert, on transforme l'image en un tableau unique en noir et blanc par combinaison, pour chaque pixel, des valeurs d'intensité pondérée du pixel dans les trois couleurs primaires.

La transformation en noir et blanc peut par exemple s'effectuer avantageusement par la formule

$$G = CR \times R + CB \times B + CV \times V$$

Avec CR = 46/151
CB= 25/151
CV = 80/151
R étant l'intensité en rouge
B étant l'intensité en bleu
V étant l'intensité en vert
G étant le niveau de gris

Pour effectuer ensuite les perforations à l'aide de la machine à poinçonner 17 de la figure 7, on prévoit le nombre d'outils de poinçonnage 6a-6e correspondant au nombre de seuils dans l'échelle prédéfinie de seuils de luminosité.

On effectue le poinçonnage dans l'ordre croissant des sections d'outils de poinçonnage, en réalisant tout d'abord, sur la plaque 1, tout les poinçonnages de petite section de l'image, puis les poinçonnages de section immédiatement supérieure, pour finir par les poinçonnages de plus grande section.

A chaque étape de poinçonnage à l'aide d'un outil de poinçonnage ayant la section appropriée, on effectue un balayage de la plaque 1, de préférence comme illustré sur la figure 6 par les flèches 28.

Ces balayages successifs de la plaque par des outils différents, et dans l'ordre montré sur la figure 6, constituent un balayage optimisé qui réduit le temps de fabrication du décor de plaque. C'est ce qu'on désigne sur la figure 8 par l'étape de balayage 29.

Pendant cette étape de balayage 29, les moyens électroniques de commande 18 génèrent des suites d'instructions constituant l'image en code machine 30, qui sont élaborées par une étape d'interprétation 31. L'étape d'interprétation 31 peut être une étape spécifique, adaptée à chaque machine à poinçonner 17. Pour commander certaines machines à poinçonner telles que les machines de la société AMADA, on génère les instructions en code G.

On peut, à ce stade, optimiser encore la commande de la machine à poinçonner 17, par exemple en groupant les ordres correspondant à une succession de plusieurs poinçonnages à effectuer par le même outil.

L'interprétation selon l'étape 31 peut générer des ordres de déplacement relatifs du porte-outil 8 et de la plaque 1 selon un pas constant P.

Toutefois, pour augmenter encore les possibilités de rendu de l'image, en améliorant notamment la définition et le contraste, on peut envisager de générer, au cours de l'étape d'interprétation 31, des ordres de déplacement à pas variable, le pas entre les perforations adjacentes étant une fonction croissante de la valeur de niveau de gris de la zone considérée de l'image.

On peut également prévoir une machine de poinçonnage 17 et une série d'outils de poinçonnage ayant des sections croissantes, et réalisant, entre les perforations adjacentes, un pas variable, la section de l'outil de poinçonnage et le pas étant simultanément des fonctions croissantes de la valeur de niveau de gris de la zone considérée de l'image.

Les outils de poinçonnage peuvent être à section circulaire, comme illustré sur les figures 1 et 2.

Toutefois, pour optimiser la résistance mécanique de la plaque 1, c'est-à-dire pour conserver à la plaque 1 une rigidité satisfaisante même en présence d'une multitude de perforations constituant des zones de faiblesse, on peut préférer des outils de poinçonnage ayant une section octogonale.

Sur la figure 7, on prévoit des moyens d'acquisition d'image 32 permettant d'enregistrer dans la mémoire 19 l'image numérisée 20 à reproduire.

Pour reproduire un décor sur une plaque 1 par découpe au rayon laser, on prévoit, à la place du porte-outil 8 et de l'outil 6e de poinçonnage, une source de rayon laser pour diriger un rayon laser sur la plaque à découper 1. Pour le reste, on conserve les moyens de déplacement relatif de la source laser et de la plaque 1, les moyens de commande à processeur 18, et la mémoire 19.

Les moyens électroniques de commande à processeur 18 pilotent la source laser et les moyens de déplacement 13 et 16 en fonction d'instructions préalablement enregistrées dans la mémoire 19. Le programme enregistré dans la mémoire 19 est adapté pour piloter le processeur et les moyens électroniques de commande 18 selon les étapes du procédé pour générer des perforations traversantes en forme de fentes généralement parallèles et continues 4 et 5 (figure 3), la section de chaque tronçon de fente étant une fonction croissante de la valeur de niveau de gris de la zone considérée de l'image 20.

La présente invention n'est pas limitée aux modes de réalisation qui ont été explicitement décrits, mais elle en inclut les diverses variantes et généralisations contenues dans le domaine des revendications ci-après.

**Revendications**

**1.** Procédé pour reproduire un décor sur une plaque (1), dans lequel :

a) on prépare une image numérisée (20) formée d'une suite de pixels représentant chacun la luminosité d'une zone élémentaire de l'image,

b) on réalise, sur l'image numérisée (20), une opération de seuillage (27) en remplaçant la valeur de chaque pixel par la valeur de seuil la plus proche dans une échelle prédéfinie de seuils de luminosité,

c) on réalise, dans la plaque (1), des perforations traversantes (P1-P7) dont la position correspond à la position des pixels dans l'image, et dont la section correspond à la valeur de seuil affectée à chaque pixel de l'image.

**2.** Procédé selon la revendication 1, **caractérisé en ce que**, au cours de l'étape a) de préparation d'une image numérisée

- si l'image est en noir et blanc, on retient dans la suite de pixels les niveaux de gris,
- si l'image est en couleurs, on la transforme en noir et blanc par combinaison, pour chaque pixel, des valeurs d'intensité pondérées du pixel dans trois couleurs primaires.

**3.** Procédé selon la revendication 2, **caractérisé en ce que** la transformation en noir et blanc s'effectue par la formule :

$$G = CR \times R + CB \times B + CV \times V$$

Avec CR = 46/151
CB = 25/151
CV = 80/151
R étant l'intensité en rouge
B étant l'intensité en bleu
V étant l'intensité en vert
G étant le niveau de gris

**4.** Procédé selon l'une quelconque des revendications 1 à 3, **caractérisé en ce que**, préalablement à l'étape de seuillage (27), on réalise une analyse histographique (21) de l'image en considérant le nombre de pixels de l'image pour chaque niveau de gris, et on effectue si nécessaire un traitement (24) de l'image en corrigeant les valeurs de niveau de gris des pixels pour se rapprocher d'une distribution de référence (25) dans laquelle la courbe des niveaux de gris présente un minimum dans la zone des niveaux de gris moyens et se relève progressivement dans les deux zones extrêmes de niveaux de gris forts et de niveaux de gris faibles.

**5.** Procédé selon l'une quelconque des revendications l à 4, **caractérisé en ce que** les perforations traversantes sont des perforations disjointes (P1-P7) réalisées par poinçonnage.

**6.** Procédé selon la revendication 5, **caractérisé en ce que** l'on utilise une machine de poinçonnage (17) et une série d'outils de poinçonnage (6a-6e) ayant chacun une section sensiblement proportionnelle à l'une des valeurs de seuil de l'échelle prédéfinie de seuils de luminosité.

**7.** Procédé selon la revendication 6, **caractérisé en ce que** l'on effectue le poinçonnage de la plaque (1) dans l'ordre croissant des sections d'outils de poinçonnage, en réalisant tout d'abord sur la plaque (1) tous les poinçonnages de petite section de l'image, puis les poinçonnages de section immédiatement supérieure, pour finir par les poinçonnages de plus grande section.

**8.** Procédé selon la revendication 5, **caractérisé en ce que** l'on utilise une machine de poinçonnage (17) avec un outil de poinçonnage (6e) de section prédéfinie, et avec, entre les perforations adjacentes, un pas (P) étant une fonction croissante de la valeur de niveau de gris de la zone considérée de l'image (20).

**9.** Procédé selon la revendication 5, **caractérisé en ce qu'**on utilise une machine de poinçonnage (17) et une série d'outils de poinçonnage (6a-6e) ayant des sections croissantes, et réalisant, entre les perforations adjacentes, un pas variable, la section de l'outil de poinçonnage (6a-6e) et le pas (P) étant simultanément des fonctions croissantes de la valeur de niveau de gris dans la zone considérée de l'image (20).

**10.** Procédé selon l'une quelconque des revendications 1 à 9, **caractérisé en ce que** les outils de poinçonnage (6a-6e) ont une section octogonale.

**11.** Procédé selon l'une quelconque des revendications 1 à 4, **caractérisé en ce que** les perforations traversantes sont des fentes (4, 5) généralement parallèles et continues à sections variables, réalisées par découpe au laser de la plaque (1), la section de chaque tronçon de fente étant une fonction croissante de la valeur de niveau de gris de la zone considérée de l'image (20).

**12.** Dispositif pour reproduire un décor sur une plaque (1), **caractérisé en ce qu'**il comprend :

- une machine de poinçonnage (17), avec un support de plaque (10) pour supporter une plaque à poinçonner (1), un porte-outil (8) adapté pour tenir un poinçon (6e) et ayant des moyens de frappe pour actionner axialement en impulsions le poinçon (6e), des moyens de guidage (12, 15) et d'entraînement (13, 16) pour assurer un déplacement relatif du porte-outil (8) et du support de plaque (10) sur toute la surface à poinçonner de la plaque (1),
- des moyens électroniques de commande (18) à processeur, pour piloter les moyens de frappe du porte-outil (8) et les moyens d'entraînement (13, 16) en fonction d'instructions préalablement enregistrées dans une mémoire (19),
- des moyens d'acquisition d'image (32), pour enregistrer dans la mémoire (19) l'image numérisée à reproduire (20),
- un programme enregistré dans la mémoire (19), adapté pour piloter le processeur et les moyens électroniques de commande (18) selon les étapes du procédé de l'une quelconque des revendications I à 10.

**13.** Dispositif pour reproduire un décor sur une plaque (1), **caractérisé en ce qu'**il comprend :

- une machine de découpe par rayon laser, avec un support de plaque (10) pour supporter la plaque à découper (1), une source de rayon laser pour diriger un rayon laser sur la plaque à découper (1), des moyens de guidage (12, 15) et d'entraînement (13, 16) pour assurer un déplacement relatif de la source de rayon laser et du support de plaque (10) sur toute la surface à décorer de la plaque,
- des moyens électroniques de commande (18) à processeur, pour piloter la source de rayon laser et les moyens d'entraînement (13, 16) en fonction d'instructions préalablement enregistrées dans une mémoire (19),
- des moyens d'acquisition d'image (32), pour enregistrer dans la mémoire (19) l'image numérisée (20) à reproduire,
- un programme enregistré dans la mémoire (19), adapté pour piloter le processeur et les moyens électroniques de commande (18) selon les étapes du procédé de découpe au laser de l'une quelconque des revendications 1 à 4 et 11.

**14.** Plaque décorée réalisée par un procédé selon l'une quelconque des revendications 1 à 11, constituant un panneau de protection à marquage inaltérable.

**15.** Plaque décorée réalisée par un procédé selon l'une quelconque des revendications 1 à 11, constituant une grille de ventilation.

**16.** Plaque décorée réalisée par un procédé selon l'une quelconque des revendications I à 11, constituant un élément de mobilier urbain, ou une enseigne, ou un parement de bâtiment ou une porte ou portail décorés.

FIG. 1

FIG. 2

FIG. 3

FIG. 4

FIG. 5

FIG. 6

FIG. 7

20 — IMAGE NUMERISEE

21 — ANALYSE HISTOGRAPHIQUE

24 — TRAITEMENT

23 — ACCEPTE

NON

OUI

27 — SEUILLAGE

29 — BALAYAGE

31 — INTERPRETATION

30 — CODE MACHINE

**FIG. 8**